# FASCICULE DE BREVET EUROPEEN

(11) **EP 1 816 044 B1**
(45) Date de publication et mention de la délivrance du brevet: **27.08.2008**
(21) Numéro de dépôt: 07290120.0
(22) Date de dépôt: 30.01.2007
(51) Int. Cl.: B60S 1/52

(54) **Dispositif de lavage d'une surface transparente ou réfléchissante, notamment la glace d'un projecteur d'un véhicule automobile**
Vorrichtung zum Reinigen einer transparenten oder spiegelnden Oberfläche, insbesondere des Glases eines Scheinwerfers eines Kraftfahrzeugs
Device for washing a transparent or reflecting surface, in particular the mirror of an automobile projector

(30) Priorité: 31.01.2006 FR 0600882
(43) Date de publication de la demande: 08.08.2007
(73) Titulaire: VALEO VISION, 93012 Bobigny Cédex (FR)
(72) Inventeur: Vraux, Didier, 93140 Bondy (FR)
(74) Mandataire: Renous Chan, Véronique

(56) Documents cités:
- EP-A- 0 581 672
- DE-A1- 10 125 898
- FR-A- 2 810 606

## Description

L'invention concerne un dispositif de lavage pour une surface transparente ou réfléchissante d'un véhicule automobile, notamment une glace de projecteur.

Un tel dispositif est utilisé de manière courante dans le domaine de l'automobile pour nettoyer les glaces de projecteurs au cours de la circulation du véhicule. Il comprend une ou plusieurs buses ou gicleurs alimentés en liquide de lavage sous pression. Ces buses ou gicleurs sont placés en avant de la glace du projecteur à une distance déterminée, et ils projettent le liquide en direction de la glace du projecteur pour effectuer son nettoyage.

Il est connu de monter les buses ou gicleurs dans le pare-choc du véhicule dans un but d'aérodynamisme. Pour une meilleure efficacité du lavage il est également connu de monter ces éléments sur un organe télescopique intégré dans le véhicule, notamment le pare-choc ou la calandre. Un tel mode de construction est décrit par exemple dans la demande de brevet EP 581 672. Les gicleurs sont montés dans un porte-gicleur qui est assemblé à l'extrémité de la tige d'un organe télescopique. L'organe télescopique est intégré dans le pare-choc, il comprend un corps qui est fixé au véhicule, et une tige coulissante qui traverse la paroi du pare-choc. L'organe télescopique est alimenté par le liquide de lavage qui est canalisé jusqu'aux gicleurs. La sortie de la tige se produit avec la mise en route de la pompe sous l'action de la pression du liquide. Un ressort de rappel comprimé par le mouvement de sortie de la tige assure la rentrée de la tige une fois le lavage terminé. Eventuellement un dispositif à clapet commande l'alimentation des gicleurs en liquide de lavage seulement lorsque la tige est sortie.

Pour un tel dispositif, il est nécessaire qu'en position rentrée de la tige le porte-gicleur soit plaqué fermement contre la paroi du pare-choc, pour des raisons d'aérodynamisme et d'esthétique. Compte tenu des tolérances de fabrication relativement larges de cet élément, une solution simple consiste à plaquer le porte -gicleur contre la paroi du pare-choc à l'aide de la force du ressort de rappel. C'est à dire que le capot de fermeture du porte-gicleur arrive au contact de la paroi du pare-choc quelques millimètres de course avant la rentrée complète de l'organe télescopique. La compression du ressort à ce moment de la course produit la force de rappel avec laquelle le porte-gicleur est plaqué contre le pare-choc.

Ce mode de construction donne de bons résultats. Cependant il faut résoudre un problème d'assemblage. En effet, l'assemblage de l'organe télescopique au véhicule et l'assemblage du porte-gicleur à la tige de l'organe télescopique sont réalisés à des moments différents de la construction du véhicule, et le plus souvent par des opérateurs différents. En plus, par construction le porte-gicleur présente en plan des dimensions supérieures à celles de l'ouverture par laquelle il traverse la paroi du pare-choc.

Dans ces conditions, le porte-gicleur est assemblé à l'organe télescopique après que cet organe soit assemblé au véhicule. Pour permettre le montage du porte-gicleur sur la tige de l'organe télescopique, la demande de brevet précitée propose de monter sur la tige de l'organe télescopique une bague de blocage provisoire qui retient cette tige dans une position intermédiaire entre sa position rentrée et sa position sortie en prenant appui contre le corps de l'organe télescopique. Ceci permet à un opérateur d'emmancher le porte-gicleur sur l'extrémité de la tige sans avoir à provoquer la sortie de la tige par un moyen quelconque. La bague de blocage est montée initialement par le constructeur de l'organe télescopique et elle est extraite par un opérateur après le montage de l'organe télescopique sur le véhicule et l'assemblage du porte-gicleur à l'extrémité de la tige. Une fois que la bague est extraite, la tige est libérée, elle est rappelée en direction de sa position rentrée par le ressort de rappel.

Ce mode de construction donne de bons résultats, cependant il n'est pas totalement satisfaisant. En effet le montage et l'extraction de la bague nécessitent que la tige de l'organe télescopique soit libre d'accès dans la région du corps. La bague s'appuie en effet initialement contre l'extrémité supérieure du corps pour retenir la tige et permettre le montage du porte-gicleur. Dans ces conditions au cours de l'utilisation du dispositif de lavage il devient difficile de protéger le corps contre une pénétration d'eau ou de particules de saleté qui seraient véhiculées par la tige lors de sa rentrée dans le corps. De l'eau ou de la saleté sont susceptibles à la longue de bloquer la tige ou tout au moins d'entraver ses mouvements de sortie et de rentrée.

Le plus souvent l'organe télescopique est monté dans une position verticale. De plus le dispositif de lavage est appelé à être utilisé principalement par temps de pluie ou dans des conditions atmosphériques difficiles. On comprend aisément que l'étanchéité entre le corps et la tige doit être maîtrisée aussi bien que possible.

Une première solution consiste à monter un joint racleur dans le corps, au niveau du passage de la tige. Toutefois compte tenu des tolérances de fabrication de la tige, compte tenu également que la tige de l'organe télescopique peut présenter des nervures ou des rainures de guidage, l'efficacité d'un tel joint racleur est difficile à maîtriser dans le temps. Le joint finit par s'user et perdre ses qualités d'étanchéité. Ce mode de construction n'est donc pas totalement satisfaisant.

Un autre inconvénient de la bague de blocage provisoire est que son extraction nécessite l'intervention manuelle d'un opérateur. Si cette opération n'est pas réalisée le porte-gicleur n'est pas plaqué correctement contre le pare-choc.

Enfin l'extraction des bagues nécessite que les bagues soient ensuite récupérées puis jetées ou recyclées. L'utilisation des bagues impose de ce fait des opérations additionnelles au montage.

Vu cet état de la technique il existe un besoin pour un dispositif de lavage dont la construction est améliorée, notamment sur le plan du montage du dispositif de lavage qui est rendu plus simple et plus sûr, et sur le plan de l'étanchéité à la liaison entre le corps et la tige qui est renforcée.

Ainsi, l'invention propose un dispositif de lavage pour le lavage d'une surface transparente ou réfléchissante à l'aide d'au moins un gicleur porté par un porte-gicleur qui comprend un vérin avec un corps et une tige coulissant relativement au corps entre une position rentrée et une position sortie, un dispositif de rappel, préférentiellement élastique, de la tige du vérin en position rentrée, un dispositif de montage du porte-gicleur situé à l'extrémité de la tige opposée au piston, un dispositif de retenue de la tige dans une position intermédiaire entre la position rentrée et la position sortie.

Le dispositif de retenue comprend une bague montée sur la tige et formant verrou de retenue de la tige dans sa position intermédiaire, la bague étant mobile entre une position de retenue de la tige et une position de libre circulation de la tige, et un dispositif d'indexation angulaire de la bague pour déplacer la bague d'une position à l'autre avec le déplacement de la tige en direction de sa position sortie.

Préférentiellement, la tige présente au moins une cannelure longitudinale en saillie à sa périphérie et la bague a un évidement central pour la tige avec au moins une encoche dont la forme et les dimensions correspondent à celles de chaque cannelure, et que chaque cannelure est interrompue dans une zone de section réduite de la tige où la bague peut pivoter sur elle-même.

Préférentiellement, la tige présente quatre cannelures réparties à sa périphérie, et que la bague a quatre encoches en correspondance de forme, de dimensions et de disposition avec les cannelures.

Préférentiellement, le corps du vérin a des rainures de guidage de la tige en correspondance avec la ou les cannelures de la tige.

Préférentiellement, un soufflet de protection est monté entre le sommet du corps de vérin et la tige.

Selon d'autres aspects, l'invention concerne également un dispositif d'éclairage et/ou signalisation tel qu'un projecteur automobile et un véhicule automobile équipé d'un dispositif de lavage tel que décrit brièvement ci-dessus.

L'invention sera mieux comprise en se référant à la description ci-dessous et aux dessins en annexe qui lui sont attachés.

La figure 1 est une vue générale du dispositif de l'invention, le porte-gicleur étant représenté dans ses deux positions rentrée et sortie.

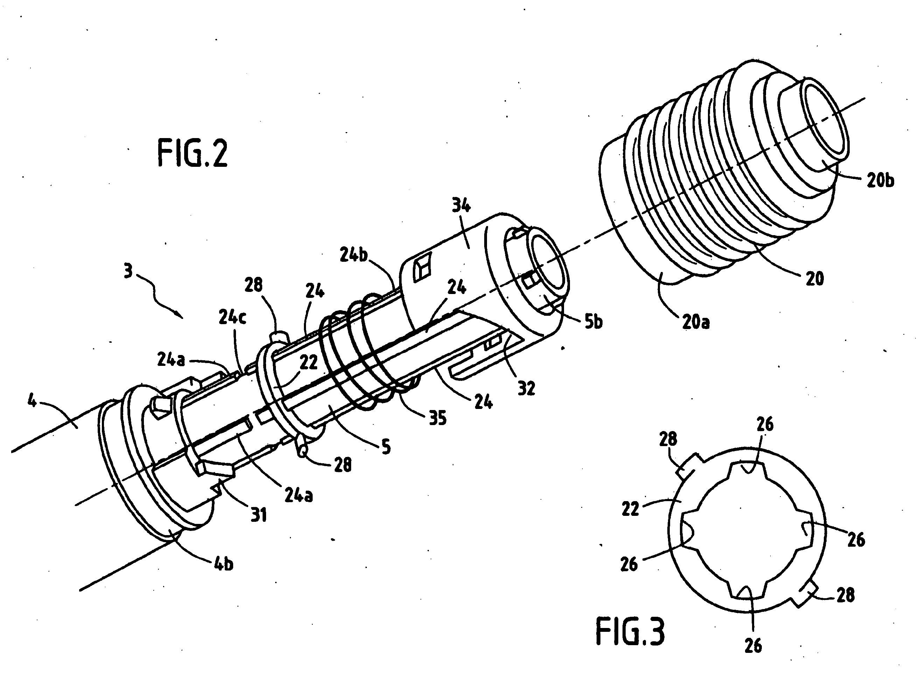

La figure 2 montre en vue éclatée les différents éléments du vérin.

La figure 3 est une vue de dessus de la bague de retenue.

Les figures 4 et 5 montrent une première position de fonctionnement du dispositif, dans la figure 5 la cage a été ôtée pour montrer les éléments qui sont en dessous.

Les figures 6 et 7 illustrent une deuxième position de fonctionnement du dispositif, pour la figure 7 également la cage a été ôtée.

La figure 8 représente une vue éclatée de la tige de vérin et différents éléments de blocage et/ou d'indexation, selon un deuxième mode de réalisation.

La figure 9 représente une bague de retenue, selon le deuxième mode de réalisation.

La figure 10 représente la coopération entre la bague de retenue et la tige de vérin, selon le deuxième mode de réalisation.

La figure 11 montre une première position de fonctionnement du dispositif selon le deuxième mode de réalisation.

La figure 12 montre une deuxième position de fonctionnement du dispositif selon le deuxième mode de réalisation.

Dans la suite de la description les termes tels que "haut", "bas", base", "fond", "sommet" ou autres qui sont employés doivent être interprétés par rapport à la représentation du dispositif dans les dessins et non par rapport à la position du dispositif sur un véhicule. En effet sur un véhicule le dispositif peut être monté en position verticale, horizontale ou autre, selon les contraintes liées à son environnement.

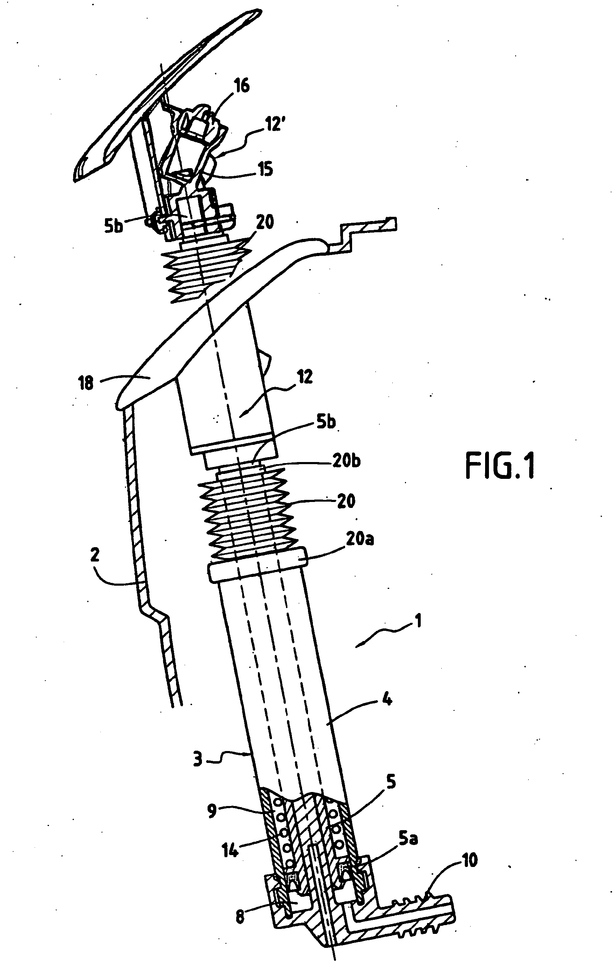

La figure 1 montre un dispositif de lavage 1 conforme à l'invention qui est monté dans le pare-choc d'un véhicule qu'on a schématisé en 2. Par exemple le dispositif est monté dans le pare-choc à proximité d'un projecteur équipé d'une glace qu'il aura la charge de nettoyer.

Le dispositif de lavage comprend un vérin télescopique 3 avec un corps tubulaire 4 qui est fixé solidairement au véhicule par tout moyen approprié, et par exemple par des pattes, des oreilles, un collier, une bride ou autre. Ces moyens de fixation sont connus et ne sont pas représentés dans les figures.

Une tige 5 est montée coulissante relativement au corps. La base de la tige 5 forme un piston 5a et tout moyen approprié convient pour réaliser l'étanchéité entre le piston et l'intérieur du corps, notamment un joint à lèvre. Le piston définit dans le corps une chambre arrière 8 et une chambre avant 9. Un conduit 10 débouche dans le chambre arrière 8 pour alimenter le vérin en liquide sous pression.

De façon classique l'injection de liquide sous pression dans la chambre arrière 8 du corps provoque la sortie de la tige par coulissement à l'intérieur du corps. L'injection de liquide est par exemple commandée par une pompe reliée à un réservoir et actionnée par une commande électrique située au tableau de bord. Ces différents éléments sont connus et ne seront pas décrits plus en détail.

Selon le mode de réalisation représenté la sortie de la tige provoque la compression d'un ressort de rappel 14 qui se trouve dans la chambre avant 9 du vérin 3. Ce ressort rappelle la tige en position rentrée lorsque l'alimentation en liquide sous pression cesse. Ce moyen de rappel élastique n'est toutefois pas limitatif, et d'autres moyens de rappel peuvent aussi convenir, par exemple un fluide sous pression tel qu'un gaz ou un liquide ou d'autres moyens encore.

Avantageusement la tige 5 est creuse pour que le liquide injecté sous pression soit canalisé par la tige elle-même jusqu'à son extrémité libre 5b opposée au piston.

Un porte-gicleur est assemblé à cette extrémité 5b de la tige. Le porte-gicleur est représenté dans la figure 1 en vue de côté et en coupe dans ses deux positions extrêmes repérées par les références 12 et 12' et correspondant respectivement aux positions de repos et de service du dispositif de lavage.

De façon connue, le porte-gicleur comprend un corps 15 qui est monté à l'extrémité 5b de la tige 5. Par exemple le corps 15 du porte-gicleur est assemblé par emmanchement à l'extrémité 5b de la tige 5, et il est retenu par une épingle élastiquement déformable dont les branches se logent dans des encoches du corps et de la tige. D'autres modes d'assemblage peuvent aussi convenir.

Un gicleur 16 est assemblé sur le corps 15 du porte-gicleur. Le gicleur est alimenté en liquide de lavage sous pression via la tige 5 et le corps 15, et il est chargé de projeter ce liquide en direction de la glace du projecteur à nettoyer. Le nombre de gicleur n'est pas limitatif, et on peut équiper un porte-gicleur d'un ou plusieurs gicleurs. L'orientation du gicleur et sa distance par rapport à la glace du projecteur sont par ailleurs déterminées pour optimiser les conditions dans lesquelles le liquide de lavage est projeté sur la surface à nettoyer. Ceci est à la portée de l'homme du métier. D'autres modes de construction peuvent aussi convenir, en particulier le ou les gicleurs peuvent former une seule pièce avec le porte-gicleur. On peut équiper aussi le porte-gicleur avec d'autres accessoires pour faire varier l'orientation du jet de liquide au cours du lavage et ainsi améliorer son efficacité. De tels dispositifs sont aussi connus de l'homme du métier.

Egalement on peut prévoir des moyens tels qu'une ou plusieurs rainures, nervures ou un méplat ou d'autres moyens encore entre la tige et le corps du vérin pour indexer angulairement l'orientation du porte-gicleur relativement au corps de vérin afin que le gicleur soit orienté correctement dans sa position de service. De tels moyens sont connus. Des moyens particuliers seront décrits ultérieurement en relation plus directe avec l'objet de l'invention.

Le porte-gicleur 12 est par ailleurs surmonté d'un capot de fermeture 18. Les dimensions en plan de ce capot sont supérieures à celles de l'ouverture dans le pare-choc prévue pour la tige 5 pour que le capot obture complètement cette ouverture lorsque la tige est sollicitée vers sa position de rentrée. En outre le capot 18 présente extérieurement une forme qui s'harmonise avec celle du pare-choc pour s'intégrer dans son esthétisme.

En position de service du porte-gicleur, qui est repérée par la référence **12',** la pression du liquide de lavage a provoqué la sortie de la tige du vérin jusqu'à une position de butée qui place le porte-gicleur dans la position adéquate pour le lavage de la glace du projecteur.

Lorsque la pression de liquide cesse, la tige du vérin est rappelée par le ressort 14 vers sa position rentrée. La position du corps par rapport à la carrosserie du véhicule et les dimensions des différents éléments font que le capot de fermeture 18 est plaqué contre la paroi du pare-choc avant que le piston 5a ait atteint sa position de butée au fond du corps du vérin, c'est à dire avant que la tige ait atteint sa position complètement rentrée. Dans ces conditions par sa compression résiduelle le ressort 14 sollicite élastiquement la tige 5 vers le fond du corps du vérin, ce qui maintient le capot de fermeture plaqué contre la paroi du pare-choc.

Les différents éléments du vérin et du porte-gicleur sont réalisés en tout matériau approprié, par exemple ils sont réalisés en une matière plastique moulée par injection, notamment du polyaétal (POM).

Selon un premier aspect de l'invention un dispositif de protection extensible 20 est monté entre le sommet du corps et la tige pour protéger la zone où la tige traverse la paroi du corps. Tout dispositif approprié convient, en particulier un soufflet extensible dont la base 20a est emmanchée sur le sommet du corps de vérin et l'encolure supérieure 20b enserre la partie supérieure de la tige. L'extrémité 5b de la tige se trouve à l'extérieur du soufflet, au-delà de son encolure 20b. De préférence on prévoit au sommet du corps et à la partie supérieure de la tige des zones en retrait et de section circulaire, respectivement 4b et 5c, pour recevoir la base et le sommet du soufflet et assurer une bonne étanchéité entre le soufflet et le vérin.

Entre la base et l'encolure le soufflet 20 présente une pluralité de plis qui se détendent avec la sortie de la tige de vérin et se reforment avec le retour de la tige à la manière d'un soufflet d'accordéon.

Sous le soufflet 20, le vérin est équipé d'un dispositif de retenue temporaire de la tige en position intermédiaire. De façon connue, ce dispositif maintient la tige 5 dans une position intermédiaire entre la position rentrée et la position sortie pour permettre le montage du porte-gicleur à son extrémité 5b, bien que la tige soit sollicitée par le ressort de rappel 14 vers sa position rentrée.

Selon le mode de réalisation illustré le dispositif de retenue temporaire comprend une bague 22 de forme générale circulaire. La bague est montée sur la tige 5 du vérin. Elle coopère d'une part avec des cannelures 24 portée par la tige du vérin et d'autre part avec un dispositif d'indexation angulaire qui définit l'orientation de la bague relativement à la tige.

Selon les figures la tige présente quatre cannelures en saillie 24. Les cannelures sont réparties de façon régulière à la périphérie de la tige, elles sont parallèles et longitudinales. Le nombre des cannelures n'est cependant pas limitatif, il suffit qu'il y ait au moins une cannelure.

Chacune des cannelures est réalisée en deux segments, respectivement 24a et 24b, et entre les segments chaque cannelure est interrompue sur une petite longueur si bien que dans cette zone 24c la tige a une section circulaire de dimensions réduites par rapport au reste de la tige.

La bague 22 a un évidement central circulaire dont le diamètre correspond au diamètre de cette zone 24c de la tige et elle a des encoches 26 dont la forme, les dimensions et la position correspondent à la forme, aux dimensions et à la position des cannelures 24.

La longueur de la zone 24c est au moins égale à l'épaisseur de la bague 22 pour que la bague puisse pivoter sur elle-même dans cette zone 24c.

La bague peut être ainsi positionnée angulairement dans deux positions principales, une position de retenue et une position de libre circulation de la tige.

Dans la position de libre circulation, les cannelures de la bague sont en regard des encoches, la tige et la bague peuvent coulisser librement l'une relativement à l'autre. Lorsque la bague se trouve au niveau de la zone 24c de section réduite, elle peut pivoter de telle façon que les encoches et les cannelures ne soient plus en coïncidence, la bague et la tige sont alors liées entre elles. Dans cette position de retenue la bague empêche la tige de rentrer dans le corps du vérin sous l'action de rappel du ressort 14, elle retient la tige dans une position intermédiaire qui est déterminée par la position de la zone 24c de section réduite par rapport aux extrémités de la tige.

Ainsi la bague 22 forme un verrou de retenue de la tige dans sa position intermédiaire, avec deux positions de fonctionnement.

De façon avantageuse le sommet du corps présente également des rainures de guidage pour les différentes cannelures 24 afin de guider et d'indexer angulairement la tige relativement au corps. Egalement le porte-gicleur peut prendre appui sur les cannelures pour être indexé angulairement relativement au corps du dispositif de lavage. On peut prévoir des cannelures avec des dimensions différentes en section, ou une cannelure décalée par rapport aux autres ou tout autre système comme détrompeur pour permettre l'assemblage du porte-gicleur à l'extrémité de la tige seulement si ce porte-gicleur est présenté avec une orientation correcte.

D'autres formes en section de la tige peuvent aussi convenir. Ce qui importe est que la tige ait une section générale non circulaire qui permet une indexation angulaire de la tige relativement au corps, également une indexation angulaire de la bague relativement à la tige. Et la tige présente sur une portion de sa longueur une zone ayant des dimensions réduites en section dans laquelle la bague peut pivoter sur elle-même relativement à la tige pour pouvoir être déplacée entre deux positions, une position de libre circulation dans laquelle la section de son évidement central est en coïncidence avec la section externe générale de la tige, et une position de retenue dans laquelle ces sections ne sont plus en coïncidence. Dans cet esprit on pourrait avoir une tige de section carrée avec une zone de section circulaire en retrait où la bague pourrait pivoter sur elle-même.

La rotation de la bague entre ses deux positions de retenue et de libre circulation est pilotée par un dispositif d'indexation angulaire.

Selon le mode de représentation illustré, la bague a des oreilles 28 d'indexation angulaire orientées vers l'extérieur de la bague. Deux oreilles sont représentées, mais ce nombre n'est pas non plus limitatif pourvu qu'il y ait au moins une oreille.

Chaque oreille 28 est guidée dans une fenêtre d'orientation 29. Cette fenêtre est délimitée vers le haut par une portion de rampe hélicoïdale 32 qui est apte à faire tourner la bague de sa position de retenue à sa position de libre circulation. Vers le bas la fenêtre comprend deux créneaux situés de part et d'autre d'une dent d'indexation 31. Les deux créneaux matérialisent les deux positions angulaires de retenue et de libre circulation de la bague par rapport à la tige. Un ressort de rappel 35 rappelle élastiquement la bague en direction du bas de la fenêtre 29 pour que les oreilles se positionnent de façon stable dans l'un ou l'autre des créneaux des fenêtres. Le ressort représenté est un ressort de compression hélicoïdal qui est monté sur la tige.

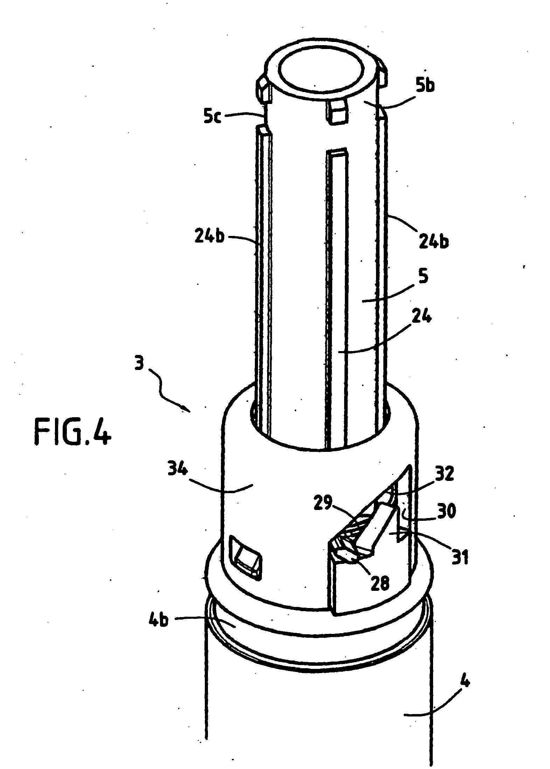

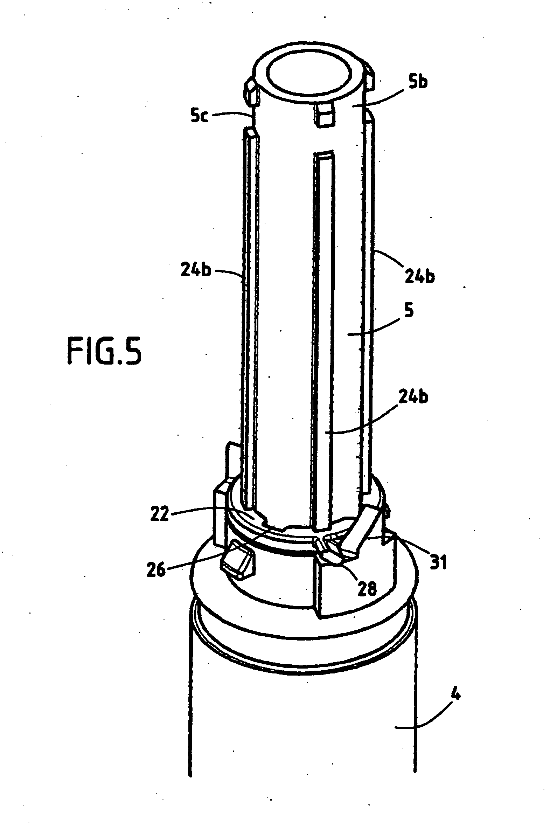

Dans la première position illustrée dans les figures 4 et 5, la bague est en position de retenue, les encoches de la bague ne sont pas en coïncidence avec les cannelures. Dans ces figures seulement la partie 24b des cannelures situées vers l'extrémité 5b de la tige est visible, l'autre partie 24a des cannelures se trouve à l'intérieur du corps du vérin. La bague se trouve au niveau de la zone 24c de la tige. La bague est rappelée vers le créneau par le ressort 35, la tige est rappelée vers sa position rentrée par le ressort 14, la bague retient la tige dans une position intermédiaire qui permet le montage du vérin sur le véhicule et l'assemblage du porte-gicleur à l'extrémité 5b de la tige 5.

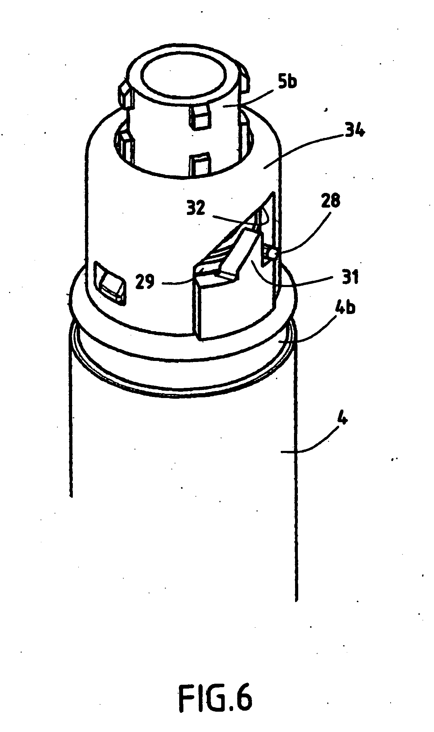

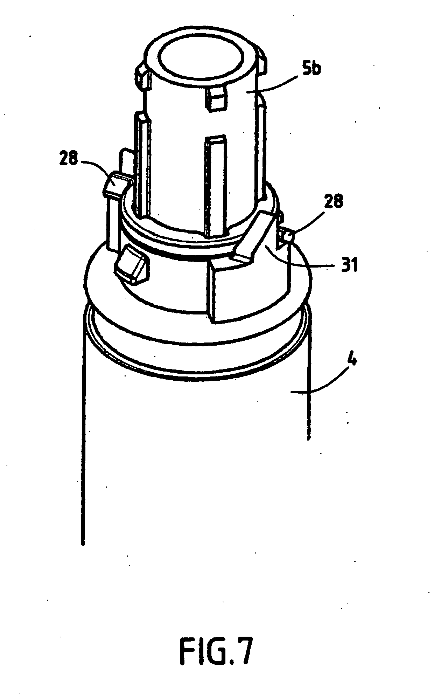

Lorsque les oreilles 28 sont dans l'autre créneau comme cela est illustré dans les figures 6 et 7, la bague est en position de libre circulation, les encoches de la bague sont en coïncidence avec les cannelures, la tige peut coulisser librement relativement à la bague et au corps. Sous l'effet de la pression du liquide et de la force de rappel du ressort 14, la tige coulisse vers sa position de sortie puis revient en position rentrée sans aucune retenue au niveau de la position intermédiaire.

Initialement, lors du montage du vérin sur le véhicule, les oreilles 28 sont dans le premier créneau, c'est à dire que la bague 22 est dans sa position de retenue.

Le transfert des oreilles du créneau de retenue au créneau de libre circulation est réalisé en déplaçant la tige en direction de sa position sortie, contre la force de rappel du ressort 14. Ce mouvement peut être réalisé par un opérateur qui exerce un petit mouvement de traction sur la tige 5 par l'intermédiaire du porte-gicleur après son assemblage, ou au moment de la première mise sous pression du dispositif de lavage. Lors de ce déplacement de la tige, la bague se déplace axialement conjointement avec la tige, mais les oreilles sont retenues à l'intérieur des fenêtres d'orientation 29 et viennent au contact des rampes hélicoïdales 32 qui forcent la bague à pivoter jusqu'à ce que les encoches 26 de la bague 22 donnent une libre circulation aux cannelures 24. La tige est alors complètement libérée par rapport à la bague. Par ce mouvement de rotation de la bague, les oreilles 28 ont franchi les dents 31. Le ressort de rappel 35 rappelle alors la bague en direction du corps et ramène ses oreilles au fond du second créneau piégeant ainsi la bague dans sa position de libre circulation. De préférence, comme cela est illustré, les dents 31 ont une face supérieure inclinée dans le même sens que la rampe 32 pour faciliter le passage des oreilles 28, et leur face qui délimite le créneau de libre circulation est relativement élevée pour éviter que les oreilles franchissent accidentellement la dent en sens inverse par la suite.

Egalement les oreilles sont de préférences inclinées pour faciliter leur contact avec les rampes 32.

Tout moyen approprié convient pour réaliser les fenêtres d'orientation des oreilles. Par exemple comme cela est représenté les dents d'indexation 31 et les fonds de créneaux sont issus du corps de vérin. Le reste de la fenêtre est formé par les découpes de la paroi d'une cage rapportée 34 qui coiffe la bague 22 et le ressort de rappel 35. La cage est rapportée au sommet du corps, elle est fixée par tout moyen approprié par exemple des languettes dentées élastiquement déformable.

D'autres modes de construction du dispositif d'indexation peuvent aussi convenir. Les fenêtres pourraient être réalisées entièrement dans la paroi d'une cage monobloc rapportée au sommet du corps de vérin. Au lieu d'un ressort de rappel qui sollicite la bague axialement, on peut utiliser un ressort de torsion ou autre qui sollicite angulairement la bague en direction de sa position de libre circulation.

D'autres variantes sont encore possibles. Il faut cependant prêter attention à l'orientation de la bague relativement aux cannelures et aux fenêtres d'orientation pour que les deux positions de retenue et de libre circulation de la bague soient bien maîtrisées et que la bague ait ses deux états de retenue et de libre circulation de la tige.

Selon un deuxième mode de réalisation, seul le dispositif de retenue et les moyens d'indexation de la bague de retenue changent par rapport au premier mode de réalisation. Par conséquent, la figure 1 peut également s'appliquer au dispositif selon le deuxième mode de réalisation, qui peut comprendre tous les éléments représentés sur cette figure 1.

Dans ce deuxième mode de réalisation, la tige et la bague comprennent pour l'une d'elles, au moins un moyen d'orientation, et pour l'autre une surface saillante d'indexation guidée par ledit moyen d'orientation. C'est-à-dire que selon une première variante, la bague comprend le moyen d'orientation, la tige comprenant la partie saillante d'indexation, et selon une deuxième variante la bague comprend la partie saillante d'indexation, la tige comprenant alors le moyen d'orientation.

Préférentiellement, la bague comprend une rampe d'orientation de forme hélicoïdale et la surface saillante d'indexation est formée par l'interruption de la cannelure de ladite tige, ladite surface saillante étant guidée par la rampe d'orientation. Ainsi lorsque une poussée est exercée par la surface saillante contre la rampe, la rampe va glisser le long de cette partie saillante et entraîner la rotation de la bague.

Préférentiellement, la bague comprend au moins un moyen élastique de blocage. Le dispositif de lavage selon le deuxième mode de réalisation comprend au moins deux cavités dans lesquelles peuvent se loger au moins en partie ledit moyen élastique de blocage. La valeur de la contrainte exercée sur ledit moyen élastique de blocage est plus élevée lorsque ledit moyen élastique de blocage est hors desdites cavités que lorsque ledit moyen élastique de blocage est logé dans lesdites cavités. On obtient ainsi deux positions de blocage de la bague, et une force doit être exercée par la partie saillante pour faire tourner la bague d'une position à une autre. Il est à noter que la valeur de cette contrainte peut être nulle lorsque ledit moyen élastique de blocage est logé dans lesdites cavités, du moment que la valeur de la contrainte est supérieure à zéro lorsque ledit moyen élastique de blocage est hors desdites cavités

Préférentiellement, le moyen élastique de blocage comprend un renflement dont l'extrémité ou la totalité constitue la partie du moyen élastique de blocage apte à se loger dans lesdites cavités.

Préférentiellement, ce renflement est porté par une partie déformable comprenant une zone allégée en matière. Par zone allégée on entend une zone où la matière est plus fine qu'en dehors de cette zone. Cette zone allégée permet à la partie portant le renflement d'être déformable et lui confère son élasticité.

Préférentiellement, le renflement s'étend radialement depuis la surface externe de ladite bague, et lesdites deux cavités sont ménagées dans une partie du corps de vérin ou un élément fixe relativement au corps du vérin.

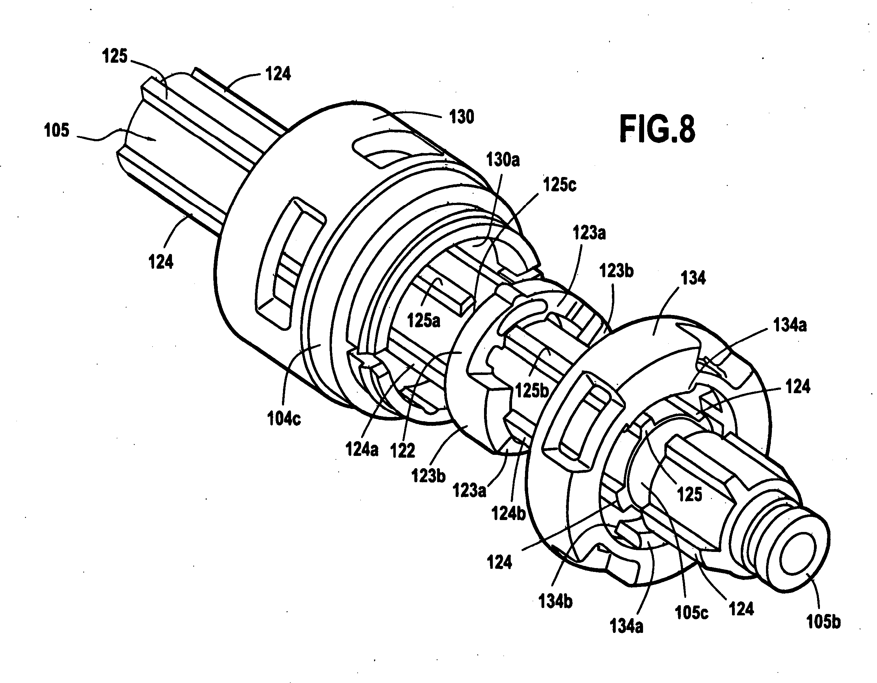

Les figures 8 à 12 illustrent un exemple de réalisation de ce deuxième mode de réalisation, dans lequel le dispositif de retenue est dépourvu de ressort, tel que le ressort de rappel 35 de la bague de retenue 22 du premier mode de réalisation décrit précédemment. Seuls la tige du vérin 105 et les éléments de retenue sont représentés.

Avantageusement, tel que représenté en figure 8, la tige 105 est creuse pour que le liquide injecté sous pression soit canalisé par la tige elle-même jusqu'à son extrémité libre 105b opposée au piston.

Egalement on peut prévoir des moyens tels qu'une ou plusieurs rainures, nervures ou un méplat ou d'autres moyens encore entre la tige et le corps du vérin pour indexer angulairement l'orientation du porte-gicleur relativement au corps de vérin afin que le gicleur soit orienté correctement dans sa position de service.

Comme dans le premier mode de réalisation de l'invention, un dispositif de protection extensible (non représenté sur la figure 8) peut être monté entre le sommet du corps et la tige pour protéger la zone où la tige traverse la paroi du corps. Dans le cas d'un soufflet extensible, la base du soufflet est emmanchée sur le sommet 130 du corps de vérin. L'encolure supérieure du soufflet enserre la partie supérieure de la tige. De préférence, on prévoit au sommet du corps et à la partie supérieure de la tige des zones en retrait et de section circulaire, respectivement 104c et 105c, pour recevoir la base et le sommet du soufflet et assurer une bonne étanchéité entre le soufflet et le vérin. Une partie de coiffe 134 se fixe sur ce sommet 130 et contribue à bloquer le soufflet. La partie de coiffe 134 comprend une ouverture centrale à l'intérieur de laquelle évolue la tige 105. Le dispositif de retenue temporaire de la tige en position intermédiaire se situe sous le soufflet.

Le dispositif de retenue temporaire comprend une bague 122 de forme générale circulaire. La bague est montée sur la tige 105 du vérin. Elle coopère avec des cannelures 124 et 125 portées par la tige du vérin et avec un dispositif d'indexation angulaire qui définit l'orientation de la bague relativement à la tige.

Lorsque le dispositif est monté, la bague 122 se loge à l'intérieur d'un logement 130a du sommet 130 du corps de vérin. La bague comprend deux créneaux formés entre deux marches 123b. L'ouverture centrale de la partie de coiffe 134 comprend deux parties 134a saillantes par rapport aux parois intérieures de l'ouverture centrale et saillantes en direction du centre de l'ouverture centrale. Ainsi lorsque la bague 122 est dans le logement 130a et que la partie de coiffe 134 est fixée sur le sommet du corps du vérin, les surfaces supérieures 134b des parties saillantes 134a de la partie de coiffe sont en contact avec la surface du créneau 123a. Ainsi la bague de retenue 122 est bloquée en déplacement longitudinal par rapport à la tige 105, entre le sommet 130 et la partie de coiffe 134. Lorsqu'elle est libre en rotation, comme cela sera exposé ci-dessous, la bague peut tourner autour de la tige 105, chaque surface du créneau 123a coulissant contre la surface supérieure 134b des parties saillantes 134a correspondantes de la partie de coiffe.

Il est à noter que le nombre de parties saillante 134a n'est pas limitatif. Leur nombre, leurs positionnements et leurs largeurs sont adaptés pour que ces parties saillantes puissent coulisser à l'intérieur des créneaux 123a.

La tige 105 présente quatre cannelures en saillie 124 et 125. Les cannelures sont réparties de façon régulière à la périphérie de la tige, elles sont parallèles et longitudinales. Le nombre des cannelures n'est cependant pas limitatif, il suffit qu'il y ait au moins une cannelure.

Chacune des cannelures est réalisée en deux segments, respectivement 124a et 124b pour les cannelures 124, et 125a et 125b pour les cannelures 125. Entre les segments, chaque cannelure est interrompue sur une petite longueur, si bien que dans cette zone d'interruption 124c et **125c,** la tige a une section circulaire de dimensions réduites par rapport au reste de la tige.

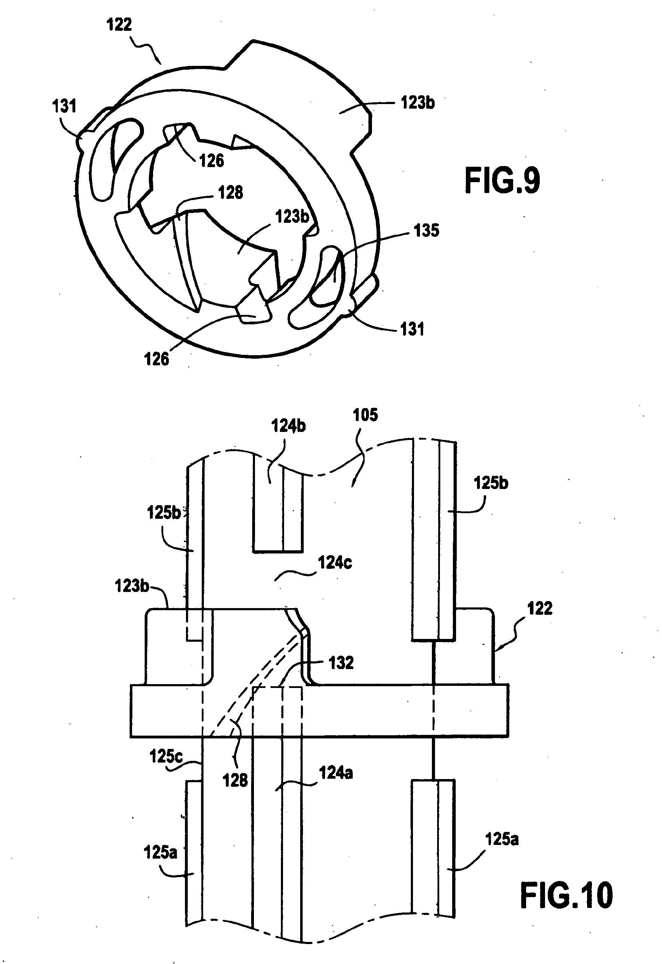

Comme représenté en figure 9, la bague 122 comprend un évidement central circulaire dont le diamètre correspond au diamètre de cette zone d'interruption 124c et 125c de la tige. La bague comprend de plus des encoches 126 dont la forme, les dimensions et la position correspondent à la forme, aux dimensions et à la position des cannelures 124 et 125.

La bague peut être ainsi positionnée angulairement dans deux positions principales, une position de retenue et une position de libre circulation de la tige. La bague comprend des renflements 131 pour bloquer la bague selon ces deux positions. Préférentiellement et tel que représenté, le renflement a une forme semblable à un demi cylindre dont la longueur correspond à l'épaisseur de la bague. Chaque partie de la bague portant un renflement 131 comprend un évidement 135 permettant la déformation élastique de cette partie, la contrainte de cette partie augmentant lorsque le renflement est poussé vers l'intérieur de la bague. La bague comprend également une rampe hélicoïdale 128 apte à coopérer avec des cannelures 124 pour faire évoluer la bague d'une position à une autre. Ce positionnement sera détaillé ci-dessous.

La figure 10 représente la bague entre sa position de retenue et sa position de libre circulation. Pour des raisons de clarté, seule la bague 122 et la tige 105 ont été représentées. Tel que représenté, le déplacement de la tige 105 vers le haut entraîne la poussée de la partie saillante 132 contre la rampe hélicoïdale 128 de la bague 122, qui va alors tourner vers la gauche, la tige se déplaçant axialement par rapport à la bague 122, qui est fixée en déplacement longitudinal au niveau du sommet du corps de vérin (non représenté en figure 10).

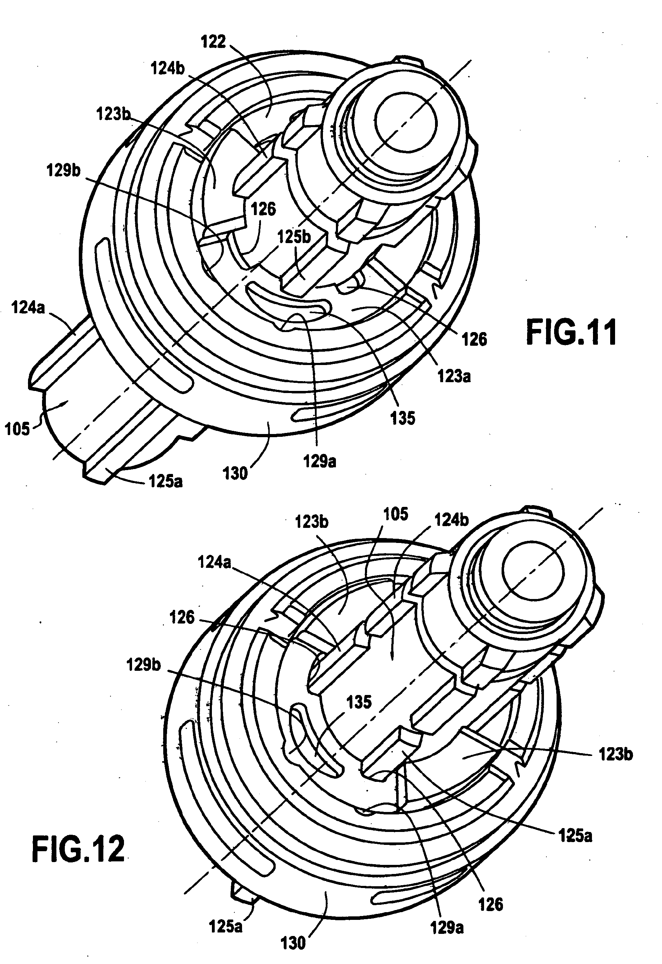

Tel que représenté en figure 11, lorsque la bague 122 est en position de retenue, les segments 124b des cannelures 124 sont en appuis contre les marches 123b de la bague, et les segments 125b des cannelures 125 sont en appuis contre la surface des créneaux 123a. Le renflement 131 de la bague est logé à l'intérieur d'une cavité 129a ménagée à l'intérieur de l'ouverture centrale du sommet 130 du corps de vérin. Pour faire tourner la bague 122 à l'intérieur du sommet 130, il faudra exercer une force suffisante pour enfoncer le renflement 131 vers l'intérieur de l'évidement 135. La bague est ainsi maintenue dans la position de retenue.

La forme cylindrique du renflement 131 facilite la déformation de la partie de support du renflement lorsque la bague subit une contrainte pour la faire tourner.

Tel que représenté en figure 12, lorsque la bague 122 est en position de libre circulation de la tige 105, les segments 124b des cannelures 124 et les segments 125b des cannelures 125 sont aptes à coulisser à l'intérieur des encoches 126 de la bague.

Une cavité 129b est ménagée à l'intérieur de l'ouverture centrale du sommet 130 du corps de vérin. Lorsque la bague arrive en position de libre circulation, le renflement 131 arrivant en face de la cavité ne subit plus de contrainte. Le renflement se loge alors à l'intérieur de la cavité 129b, bloquant ainsi la bague en position de libre circulation.

Sur la figure 10, la bague a quitté la position de retenue. Chaque marche 123b a été éloignée de la partie de segment 124b de la cannelure 124 avec laquelle elle était en contact, et est encore positionnée entre les segments 125b de cannelure 125 situés de part et d'autre de ce segment 124b. Dans l'exemple illustré, on observe un décalage longitudinal entre les zones d'interruption 124c et 125c. Selon cette variante préférentielle, la longueur de la zone d'interruption 124c correspond à l'épaisseur de la bague au niveau d'une marche 123b, de sorte que, lorsque la bague est en position de retenue, les marches 123b sont en appuis contre les segments de cannelure 124b et, en cas de poussée de la tige 105 vers le haut, chaque partie saillante 132 coopère de suite avec la rampe hélicoïdale 128. De même, tel que représenté en figure 10, l'interruption du segment 125b est préférentiellement décalée de l'épaisseur d'une marche 123b, vers le bas par rapport à l'interruption du segment 124b, pour que le créneau correspondant soit en appuis contre le segment 125b en ladite position de retenue. Encore selon cette variante, l'interruption du segment de cannelure **125a** est décalée de l'épaisseur d'une marche 123b, vers le bas par rapport à l'interruption du segment 124a, pour permettre l'évolution de la tige le long de la bague, jusqu'à ce que les encoches 126 de la bague arrivent en face des cannelures 124 et 125. La bague peut ainsi pivoter sur elle-même dans cette zone 124c, 125c, en même temps que la tige se déplace longitudinalement par rapport à cette bague.

Ainsi la bague 122 forme un verrou de retenue de la tige dans sa position intermédiaire, avec deux positions de fonctionnement.

De façon avantageuse, le sommet du corps présente également des rainures de guidage pour les différentes cannelures 124 et 125 afin de guider et d'indexer angulairement la tige relativement au corps. Des cannelures avec des dimensions différentes en section, ou tout autre système comme détrompeur peuvent également être prévus.

Une fois libérée, la tige coulisse vers sa position de sortie puis revient en position rentrée sans aucune retenue au niveau de la position intermédiaire.

Ainsi, et notamment dans le cadre des deux modes de réalisation décrits dans la présente demande, le vérin est livré par son constructeur avec la tige retenue dans sa position intermédiaire par la bague qui a été positionnée en atelier dans sa position de retenue, l'ensemble étant équipé avec le soufflet de protection.

Après montage du vérin sur le véhicule et assemblage du porte-gicleur à l'extrémité de la tige, l'opérateur tire légèrement la tige en direction de sa position de sortie ce qui amène la bague dans sa position de libre circulation, rendant ainsi le vérin totalement prêt à l'emploi pour l'utilisation du dispositif de lavage. Une fois que la bague est passée dans la position de libre circulation, elle est piégée, il n'est pas possible en principe de la ramener dans une position de retenue à moins de démonter le soufflet de protection. Contrairement à la demande de brevet citée en préambule, ici la bague de retenue ne peut pas être extraite, elle est montée à demeure sur le vérin.

Il convient cependant de remarquer que le soufflet de protection n'est pas indispensable pour le fonctionnement du dispositif de retenue temporaire qui a été décrit, ce dispositif de retenue peut fonctionner également pour un vérin qui ne serait pas équipé d'un tel soufflet.

Le dispositif de lavage qui vient d'être décrit offre un montage simplifié car il n'y a pas d'élément de retenue à extraire puis à récupérer.

Le montage est aussi plus sûr car si la bague n'est pas placée correctement en position de libre circulation par l'opérateur, de toutes les façons elle sera forcée vers cette position à la première mise en pression du dispositif de lavage.

Enfin sa protection est renforcée avec le soufflet qui protège la liaison entre le corps et la tige du vérin.

Dans le cadre du deuxième mode de réalisation, l'absence de ressort au niveau des moyens d'indexation permet de davantage simplifier le montage du dispositif de retenue et de gagner en compacité.

Naturellement la présente description n'est donnée qu'à titre indicatif et l'on pourrait adopter d'autres mises en oeuvre de l'invention sans pour autant sortir du cadre de celle-ci. Notamment le dispositif de lavage qui vient d'être décrit pourrait trouver d'autres applications que le lavage des glaces de projecteur, par exemple il pourrait être utilisé pour les miroirs de rétroviseurs, ou même pour un pare-brise, d'une façon générale pour toute surface transparente ou réfléchissante d'un véhicule automobile.

Egalement au lieu d'un vérin de type hydraulique on pourrait utiliser un vérin de type électrique ou un autre type d'actionneur linéaire à simple effet, c'est à dire avec un dispositif de rappel élastique en position rentrée. Dans ce cas l'alimentation en énergie du vérin et l'alimentation en liquide de lavage du gicleur seraient distinctes.

## Revendications

1. Dispositif de lavage pour le lavage d'une surface transparente ou réfléchissante à l'aide d'au moins un gicleur porté par un porte-gicleur et comprenant un vérin (3) avec un corps (4) et une tige (5 ; 105) coulissant relativement au corps entre une position rentrée et une position sortie, un dispositif de rappel (14) de la tige du vérin en position rentrée, un dispositif de montage du porte-gicleur situé à l'extrémité (5b ; 105b) de la tige opposée au piston (5a), un dispositif de retenue de la tige dans une position intermédiaire entre la position rentrée et la position sortie, **caractérisé par le fait que** le dispositif de retenue comprend une bague (22 ; 122) montée sur la tige et formant verrou de retenue de la tige (5 ; 105) dans sa position intermédiaire, la bague étant mobile entre une position de retenue de la tige et une position de libre circulation de la tige, et un dispositif d'indexation angulaire (28, 29 ; 128, 132) de la bague (22 ; 122) pour déplacer la bague (22 ; 122) d'une position à l'autre avec le déplacement de la tige (5 ; 105) en direction de sa position sortie.

2. Dispositif de lavage selon la revendication 1, **caractérisé en ce que** ledit dispositif de rappel (14) est un dispositif de rappel élastique.

3. Dispositif de lavage selon la revendication 1 ou 2, **caractérisé par le fait que** la tige (5 ; 105) présente au moins une cannelure (24 ; 124, 125) longitudinale en saillie à sa périphérie, que la bague (22 ; 122) a un évidement central pour la tige avec au moins une encoche (26 ;126) dont la forme et les dimensions correspondent à celles de chaque cannelure (24 ; 124, 125), et que chaque cannelure (24 ; 124, 125) est interrompue dans une zone (24c ; 124c, 125c) de section réduite de la tige (5, 105) où la bague (22, 122) peut pivoter sur elle-même.

4. Dispositif de lavage selon la revendication 3, **caractérisé par le fait que** la tige (5, 105) présente quatre cannelures (24 ; 124, 125) réparties à sa périphérie, et que la bague a quatre encoches (26 ;126) en correspondance de forme, de dimensions et de disposition avec les cannelures.

5. Dispositif de lavage selon la revendication 4, **caractérisé par le fait que** le corps (4) du vérin (3) a des rainures de guidage de la tige en correspondance avec la ou les cannelures (24 ; 124, 125) de la tige (5 ; 105).

6. Dispositif de lavage selon l'une quelconque des revendications 1 à 5, **caractérisé par le fait que** la bague (22) est sollicitée par un ressort de rappel (35) pour être maintenue dans chacune de ses positions de retenue ou sa position de libre circulation.

7. Dispositif de lavage selon l'une quelconque des revendications 1 à 6, **caractérisé par le fait que** la bague (22) a au moins une oreille d'indexation (28) qui est guidée dans une fenêtre d'orientation (29).

8. Dispositif de lavage selon la revendication 7, **caractérisé par le fait que** la fenêtre d'orientation (29) comprend une rampe de forme hélicoïdale (32).

9. Dispositif de lavage selon la revendication 7 ou 8, **caractérisé par le fait que** la fenêtre comprend deux créneaux de positionnement de la bague situés de part et d'autre d'une dent d'indexation (31).

10. Dispositif de lavage selon l'une quelconque des revendications 7 à 9, **caractérisé par le fait que** la fenêtre d'orientation (29) est découpée au moins en partie dans la paroi d'une cage (34) qui est rapportée au sommet du corps (4).

11. Dispositif de lavage selon l'une quelconque des revendications 3 à 5, **caractérisé par le fait que** ladite tige (105) et ladite bague (122) comprennent pour l'une d'elles, au moins un moyen d'orientation (128), et pour l'autre une surface saillante d'indexation (132) guidée par ledit moyen d'orientation.

12. Dispositif de lavage selon la revendication 11, **caractérisé par le fait que** ladite bague (122) comprend une rampe d'orientation (128) de forme hélicoïdale et en ce que ladite surface saillante d'indexation (132) est formée par l'interruption de la dite cannelure (124, 125) de ladite tige (105) et est guidée par ladite rampe d'orientation.

13. Dispositif de lavage selon l'une quelconque des revendications 11 ou 12, **caractérisé par le fait que** ladite bague (122) comprend au moins un moyen élastique de blocage (131, 135) et en ce que ledit dispositif de lavage comprend au moins deux cavités (129a, 129b) dans lesquelles peut se loger au moins en partie ledit moyen élastique de blocage, valeur de la contrainte exercée sur ledit moyen élastique de blocage étant plus élevée lorsque ledit moyen élastique de blocage est hors desdites cavités que lorsque ledit moyen élastique de blocage est logé dans lesdites cavités.

14. Dispositif de lavage selon la revendication 13, **caractérisé par le fait que** ledit moyen élastique de blocage (131, 135) comprend un renflement (131) dont l'extrémité ou la totalité constitue la partie du moyen élastique de blocage apte à se loger dans lesdites cavités (129a, 129b).

15. Dispositif de lavage selon la revendication 14, **caractérisé par le fait que** ledit renflement (131) est porté par une partie déformable comprenant une zone allégée en matière (135).

16. Dispositif de lavage selon la revendication 14 ou 15, **caractérisé par le fait que** ledit renflement (131) s'étend radialement depuis la surface externe de ladite bague (122) et en ce que lesdites deux cavités (129a, 129b) sont ménagées dans une partie (130) du corps de vérin ou un élément fixe relativement au corps du vérin.

17. Dispositif de lavage selon l'une quelconque des revendications précédentes, **caractérisé par le fait qu'**un soufflet de protection (20) est monté entre le sommet (4b ; 130) du corps de vérin et la tige (5 ; 105).

18. Dispositif d'éclairage et/ou signalisation tel que projecteur automobile, **caractérisé en ce qu'**il est équipé d'un dispositif de lavage selon l'une quelconque des revendications précédentes.

19. Véhicule automobile, **caractérisé en ce qu'**il comporte au moins un dispositif de lavage selon l'une quelconque des revendications précédentes.

## Claims

1. Washing device for washing of a transparent or reflective surface by means of at least one spray nozzle which is supported by a spray-nozzle holder and comprising a jack (3) with a body (4) and a rod (5; 105) which slides relative to the body, between a withdrawn position and an extended position, a device (14) for return of the rod of the jack to the withdrawn position, a device for fitting of the spray-nozzle holder which is situated at the end (5b; 105b) of the rod opposite the piston (5a), and a device for retention of the rod in an intermediate position between the withdrawn position and the extended position, **characterised in that** the retention device comprises a ring (22; 122) which is fitted on the rod and forms a lock for retention of the rod (5; 105) in its intermediate position, the ring being mobile between a position of retention of the rod and a position of free circulation of the rod, and an angular indexing device (28, 29; 128, 132) for the ring (22; 122) in order to displace the ring (22; 122) from one position to the other with displacement of the rod (5; 105) in the direction of its extended position.

2. Washing device according to claim 1, **characterised in that** the said return device (14) is a resilient return device.

3. Washing device according to claim 1 or claim 2, **characterised in that** the rod (5; 105) has at least one longitudinal groove (24; 124; 125) which projects from its periphery, the ring (22; 122) has a central recess for the rod with at least one notch (26;126), the form and dimensions of which correspond to those of each groove (24; 124, 125), and each groove (24; 124, 125) is interrupted in a area (24c; 124c; 125c) with a reduced cross-section of the rod (5, 105) where the ring (22, 122) can pivot on itself.

4. Washing device according to claim 3, **characterised in that** the rod (5, 105) has four grooves (24; 124, 125) which are distributed on its periphery, and the ring has four notches (26; 126) which correspond in form, dimensions and arrangement with the grooves.

5. Washing device according to claim 4, **characterised in that** the body (4) of the jack (3) has grooves for guiding the rod in correspondence with the groove(s) (24; 124, 125) of the rod (5; 105).

6. Washing device according to any one of claims 1 to 5, **characterised in that** the ring (22) is thrust by a return spring (35), in order to be maintained in each of its positions of retention or its position of free circulation.

7. Washing device according to any one of claims 1 to 6, **characterised in that** the ring (22) has at least one indexing lug (28) which is guided in an orientation window (29).

8. Washing device according to claim 7, **characterised in that** the orientation window (29) comprises a ramp with a helical form (32).

9. Washing device according to claim 7 or claim 8, **characterised in that** the window comprises two notches for positioning of the ring, which are situated on both sides of an indexing tooth (31).

10. Washing device according to any one of claims 7 to 9, **characterised in that** the orientation window (29) is cut out at least partly in the wall of a cage (34) which is added on to the top of the body (4).

11. Washing device according to any one of claims 3 to 5, **characterised in that** the said rod (105) and the said ring (122) comprise, for one of them, at least one orientation means (128), and for the other one, a projecting indexing surface (132) which is guided by the said orientation means.

12. Washing device according to claim 11, **characterised in that** the said ring (122) comprises an orientation ramp (128) with a helical form, and **in that** the said projecting indexing surface (132) is formed by interruption of the said groove (124, 125) of the said rod (105), and is guided by the said orientation ramp.

13. Washing device according to either of claims 11 or 12, **characterised in that** the said ring (122) comprises at least one resilient blocking means (131, 135), and **in that** the said washing device comprises at least two cavities (129a, 129b) in which the said resilient blocking means can be accommodated at least partly, the value of the constraint exerted on the said resilient blocking means being greater when the said resilient blocking means is outside the said cavities than when the said resilient blocking means is accommodated in the said cavities.

14. Washing device according to claim 13, **characterised in that** the said resilient blocking means (131, 135) comprises a bulge (131), the end or all of which constitutes the part of the resilient blocking means which can be accommodated in the said cavities (129a, 129b).

15. Washing device according to claim 14, **characterised in that** the said bulge (131) is supported by a deformable part comprising an area in which the material is reduced (135).

16. Washing device according to claim 14 or 15, **characterised in that** the said bulge (131) extends radially from the outer surface of the said ring (122), and **in that** the said two cavities (129a, 129b) are provided in a part (130) of the body of the jack or of an element which is fixed relative to the body of the jack.

17. Washing device according to any one of the preceding claims, **characterised in that** protective bellows (20) are fitted between the top (4b; 130) of the body of the jack and the rod (5; 105).

18. Lighting and/or signalling device, such as a motor vehicle headlight, **characterised in that** it is equipped with a washing device according to any one of the preceding claims.

19. Motor vehicle, **characterised in that** it comprises at least one washing device according to any one of the preceding claims.

## Patentansprüche

1. Waschvorrichtung zum Reinigen einer durchsichtigen oder reflektierenden Oberfläche mit Hilfe wenigstens einer von einem Spritzdüsenhalter getragenen Spritzdüse, die einen Zylinder (3) mit einem Körper (4) und einer bezüglich des Körpers zwischen einer eingefahrenen und einer ausgefahrenen Stellung gleitenden Stange (5; 105), eine Vorrichtung (14) zum Zurückstellen der Zylinderstange in die eingefahrene Stellung, eine Vorrichtung zur Montage des Spritzdüsenhalters, die an dem dem Kolben (5a) entgegensetzten Ende (5b; 105b) der Stange angeordnet ist, und eine Vorrichtung zum Halten der Stange in einer Zwischenstellung zwischen der eingefahrenen und der ausgefahrenen Stellung aufweist,
**dadurch gekennzeichnet, dass** die Haltevorrichtung einen auf der Stange angebrachten Ring (22; 122), der eine Halteverriegelung der Stange (5; 105) in ihrer Zwischenstellung bildet, wobei der Ring zwischen einer Position zum Halten der Stange und einer Stellung zur freien Bewegung der Stange beweglich ist, sowie eine Winkelpositionierungsvorrichtung (28, 29; 128, 132) für den Ring (22; 122) umfasst, um den Ring (22; 122) beim Verschieben der Stange (5; 105) in ihre ausgefahrene Stellung von einer Position in die andere zu verschieben.

2. Waschvorrichtung nach Anspruch 1,
**dadurch gekennzeichnet, dass** die Rückstellvorrichtung (14) eine elastische Rückstellvorrichtung ist.

3. Waschvorrichtung nach Anspruch 1 oder 2,
**dadurch gekennzeichnet, dass** die Stange (5; 105) wenigstens eine an ihrem Umfang vorstehende Rippe (24; 124, 125) aufweist, dass der Ring (22; 122) eine mittige Aussparung für die Stange mit wenigstens einer Einkerbung (26; 126) hat, deren Form und Größe der einer jeden Rippe (24; 124, 125) entspricht, und dass jede Rippe (24; 124, 125) in einem Bereich (24c; 124c, 125c) mit geringerem Querschnitt der Stange (5, 105) unterbrochen ist, wo sich der Ring (22, 122) um sich selbst drehen kann.

4. Waschvorrichtung nach Anspruch 3,
**dadurch gekennzeichnet, dass** die Stange (5, 105) vier über ihren Umfang verteilte Rippen (24; 124, 125) aufweist, und dass der Ring vier Einkerbungen (26; 126) hat, die in Form, Größe und Anordnung mit den Rippen übereinstimmen.

5. Waschvorrichtung nach Anspruch 4,
**dadurch gekennzeichnet, dass** der Körper (4) des Zylinders (3) Nuten zum Führen der Stange aufweist, die mit der oder den Rippen (24; 124, 125) der Stange (5; 105) übereinstimmen.

6. Waschvorrichtung nach einem der Ansprüche 1 bis 5,
**dadurch gekennzeichnet, dass** der Ring (22) durch eine Rückstellfeder (35) beaufschlagt ist, um in jeder seiner Haltepositionen oder seiner frei beweglichen Position gehalten zu werden.

7. Waschvorrichtung nach einem der Ansprüche 1 bis 6,
**dadurch gekennzeichnet, dass** der Ring (22) wenigstens eine Positionierungslasche (28) aufweist, die in einem Orientierungsfenster (29) geführt ist.

8. Waschvorrichtung nach Anspruch 7,
**dadurch gekennzeichnet, dass** das Orientierungsfenster (29) eine schraubenförmige Rampe (32) aufweist.

9. Waschvorrichtung nach Anspruch 7 oder 8,
**dadurch gekennzeichnet, dass** das Fenster zwei Schlitze zum Positionieren des Rings aufweist, die beidseits eines Positionierungszahns (31) angeordnet sind.

10. Waschvorrichtung nach einem der Ansprüche 7 bis 9,
**dadurch gekennzeichnet, dass** das Orientierungsfenster (29) wenigstens teilweise in die Wand eines Gehäuses (34) geschnitten ist, das oben auf den Körper (4) gesetzt ist.

11. Waschvorrichtung nach einem der Ansprüche 3 bis 5,
**dadurch gekennzeichnet, dass** die Stange (105) oder der Ring (122) wenigstens ein Orientierungsmittel (128) an einem der beiden und eine von diesem Orientierungsmittel geführte, vorstehende Positionierungsfläche (132) an dem anderen aufweisen.

12. Waschvorrichtung nach Anspruch 11,
**dadurch gekennzeichnet, dass** der Ring (122) eine schraubenförmige Orientierungsrampe (128) aufweist, und dass die vorstehende Positionierungsfläche (132) durch die Unterbrechung der Rippe (124, 125) der Stange (105) gebildet und durch die Orientierungsrampe geführt ist.

13. Waschvorrichtung nach einem der Ansprüche 11 oder 12,
**dadurch gekennzeichnet, dass** der Ring (122) wenigstens ein elastisches Arretiermittel (131, 135) aufweist, und dass die Waschvorrichtung wenigstens zwei Höhlungen (129a, 129b) umfasst, in denen wenigstens ein Teil des elastischen Arretiermittels lagern kann, wobei die Stärke der auf das elastische Arretiermittel ausgeübten Kraft größer ist, wenn sich das elastische Arretiermittel außerhalb der Höhlungen befindet, als wenn das elastische Arretiermittel in den Höhlungen lagert.

14. Waschvorrichtung nach Anspruch 13,
**dadurch gekennzeichnet, dass** das elastische Arretiermittel (131, 135) eine Verdickung (131) aufweist, deren Ende oder die insgesamt den Teil des elastischen Arretiermittels bildet, das in den Höhlungen (129a, 129b) zu lagern vermag.

15. Waschvorrichtung nach Anspruch 14,
**dadurch gekennzeichnet, dass** die Verdickung (131) von einem verformbaren Teil getragen wird, das einen materialverdünnten Bereich (135) aufweist.

16. Waschvorrichtung nach einem der Ansprüche 14 oder 15,
**dadurch gekennzeichnet, dass** die Verdickung (131) sich von der Außenseite des Rings (122) aus radial erstreckt, und dass die beiden Höhlungen (129a, 129b) in einem Teil (130) des Zylinderkörpers oder einem bezüglich des Zylinderkörpers ortsfesten Element ausgebildet sind.

17. Waschvorrichtung nach einem der vorhergehenden Ansprüche,
**dadurch gekennzeichnet, dass** eine Schutzmanschette (20) zwischen dem oberen Teil (4b; 130) des Zylinderkörpers und der Stange (5; 105) angebracht ist.

18. Beleuchtungs- und/oder Signalvorrichtung, wie etwa ein Kraftfahrzeugscheinwerfer,
**dadurch gekennzeichnet, dass** er mit einer Waschvorrichtung nach einem der vorhergehenden Ansprüche ausgestattet ist.

19. Kraftfahrzeug,
**dadurch gekennzeichnet, dass** es wenigstens eine Waschvorrichtung nach einem der vorhergehenden Ansprüche umfasst.
